# FASCICULE DE BREVET EUROPEEN

(11) **EP 0 987 457 B1**
(45) Date de publication et mention de la délivrance du brevet: **24.03.2004**
(21) Numéro de dépôt: 99402266.3
(22) Date de dépôt: 16.09.1999
(51) Int. Cl.: F16C 35/063

(54) **Agencement de retenue d'un palier notamment pour un arbre de compresseur à haute pression**
Vorrichtung zum Halten eines Lagers, insbesondere für eine Hochdruckverdichterwelle
Bearing retaining device in particular for a high pressure compressor shaft

(30) Priorité: 17.09.1998 FR 9811604
(43) Date de publication de la demande: 22.03.2000
(73) Titulaire: Snecma Moteurs, 75015 Paris (FR)
(72) Inventeur: Adde, Danielle Christiane Roberte, 77240 Cesson (FR); Bertrand, Jean-Louis, 77000 Livry sur Seine (FR); Lavigne, Gérard Jean, 77630 Arbonne (FR); Lefebvre, Olivier Richard, 77000 Melun (FR)

(56) Documents cités:
- EP-A- 0 359 659
- FR-A- 2 424 413

## Description

On décrira ici un agencement de retenue d'un palier, prévu en particulier pour soutenir un arbre de compresseur à haute pression.

La construction des turbomachines exige des aménagements compliqués à cause de l'imbrication de l'étage à compresseur et turbine à haute pression dans l'étage à compresseur et turbine à basse pression, et de la présence de deux lignes d'arbres concentriques dont chacune relie le compresseur d'un étage à la turbine correspondante. Cette complication se fait surtout sentir pendant l'entretien de la machine, quand il la faut démonter puis remonter.

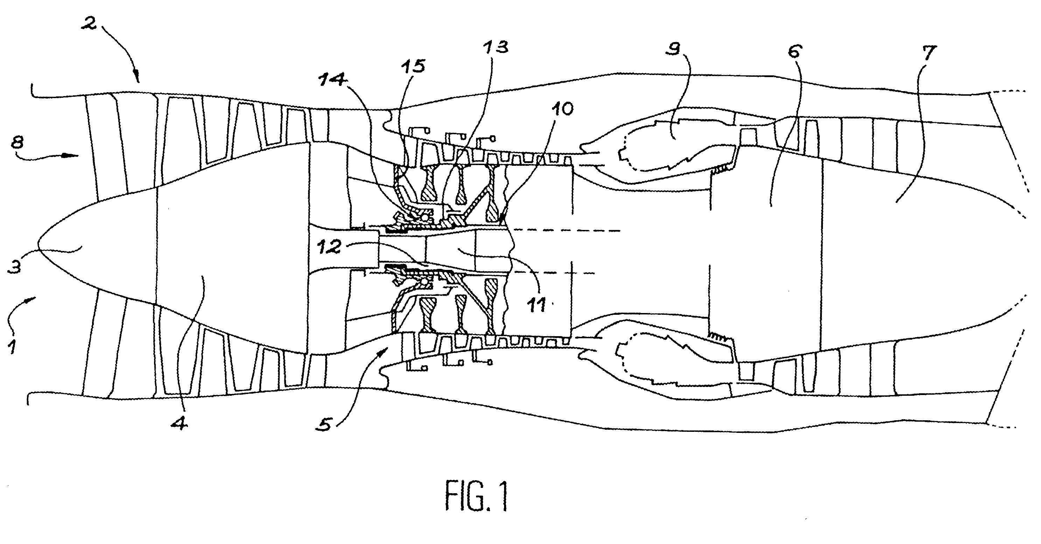

Un problème particulier apparaît pour le compresseur à haute pression. Si nous examinons la figure 1, qui représente un moteur d'avion en coupe longitudinale, un rotor 1 est engagé au centre d'un stator 2, et il comprend classiquement une soufflante 3, un compresseur à basse pression 4, un compresseur à haute pression 5, une turbine à haute pression 6 et une turbine à basse pression 7 alignés d'avant vers l'arrière. Tous ces éléments portent des aubes mobiles qui alternent avec des aubes fixes du stator 2 et se situent comme elles dans une veine annulaire 8 d'écoulement des gaz ; une chambre de combustion 9 est agencée sur la veine annulaire 8 entre le compresseur 5 et la turbine 6 à haute pression, ce qui permet d'enflammer le carburant injecté plus en avant dans la veine 8 et de produire ainsi des gaz de combustion qui entraînent les turbines 6 et 7. On trouve encore une ligne d'arbres à haute pression 10 reliant le compresseur à haute pression 5 à la turbine à haute pression 6 et une ligne d'arbres à basse pression 11, s'étendant dans une cavité 12 de la ligne d'arbres 10 précédente et qui relie le compresseur à basse pression 4 à la turbine à basse pression 7.

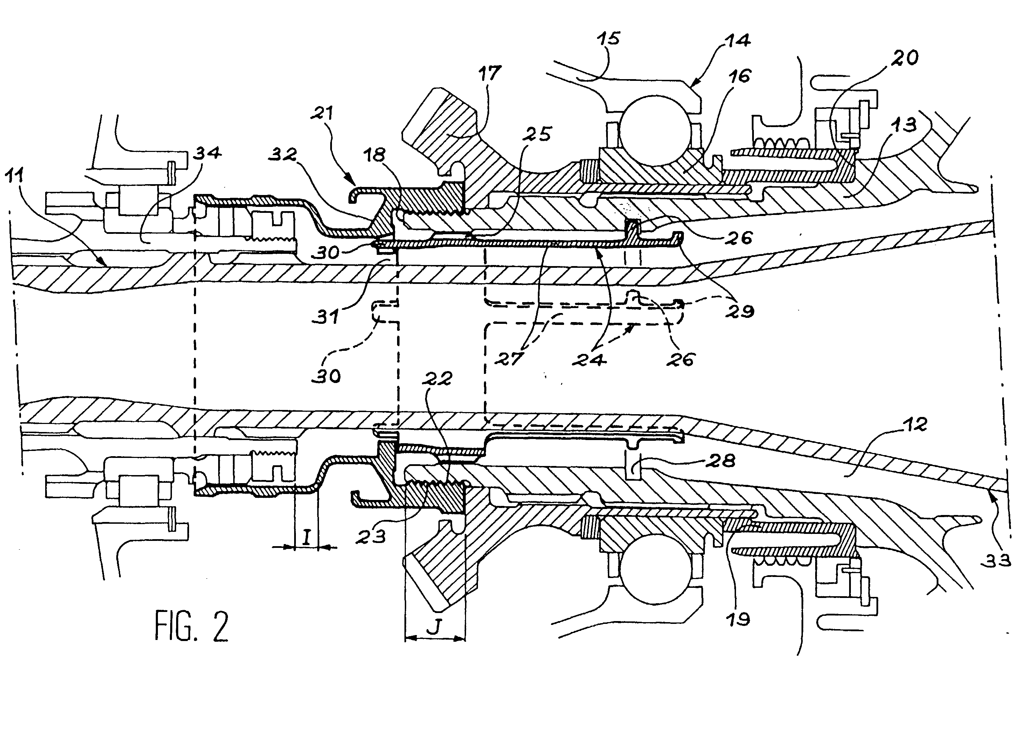

La ligne d'arbres à haute pression 10 comprend en particulier un bout d'arbre 13 de compresseur à haute pression, autour duquel est engagé un palier 14 qui le fait soutenir par une nervure 15 du stator 2. En se reportant à la figure 2 pour un examen plus précis, on voit que le palier 14 est un palier à roulement dont la bague intérieure 16 est enfilée autour du bout d'arbre 13 et maintenue en place par une bague de butée 17, elle aussi enfilée autour du bout d'arbre 13 à partir de sa face d'extrémité 18 et qui presse la bague intérieure 16 vers l'arrière, contre une bague de butée opposée 19 qui touche un épaulement 20 du bout d'arbre 13. Le serrage de la bague intérieure 16 entre les bagues de butée 17 et 19 est maintenu par un écrou 21 muni sur sa face interne d'un filetage 22, engagé dans un filetage 23 établi sur le bout d'arbre 13 près de la face d'extrémité 18 : en vissant l'écrou 21, on repousse successivement la bague de butée 17, la bague intérieure 16 et la bague de butée opposée 19 avant de comprimer cet empilement contre l'épaulement 20. L'agencement est complété par une pièce de freinage 24, dont le but est d'interdire le desserrage de l'écrou 21 consécutif aux vibrations ; cette pièce de freinage 24 est engagée dans la cavité 12 et maintenue en place dans le bout d'arbre 13 par un cercle de cannelures 25 engagées dans des cannelures correspondantes du bout d'arbre 13 et par des extrémités recourbées 26 de pattes flexibles 27 engagées dans une gorge 28 du bout d'arbre 13. Le premier de ces moyens de liaison interdit la rotation de la pièce de freinage 24, et le second sa translation, par rapport au bout d'arbre 13. Les pattes flexibles 27 sont encore complétées par des languettes de prise 29, adjacentes aux extrémités recourbées 26. Cependant, la pièce de freinage 24 comprend encore un cercle de dents 30, sortant de la cavité 12 et qui s'engagent entre des dents complémentaires 31, elles aussi disposées en cercle et établies sur une portion 32 de l'écrou 21 qui s'étend vers l'intérieur, devant la face d'extrémité 18 du bout d'arbre 13, qu'elle couvre. Pour plus de précision, on ajoute que les dents 30 sont à l'avant de la pièce de freinage 24, les pattes flexibles 27 à l'arrière, et les extrémités recourbées 26 et les languettes de prise 29 à l'arrière des pattes 27.

Pour démonter le compresseur à haute pression 5 auquel appartient le bout d'arbre 13, il faut dégager celui-ci du palier 14. Une étape préliminaire consiste à démonter la turbine à basse pression 7 afin d'extraire, en le tirant vers l'arrière, un arbre de turbine à haute pression 33 qui appartient à la ligne d'arbres à basse pression 11 et occupe l'essentiel de la cavité 12. Un outil idoine muni de griffes est alors introduit autour des languettes de prise 29 pour peser sur elles et les rassembler vers l'axe de la machine en courbant les pattes flexibles 27 : les extrémités recourbées 26 sortent de la gorge 28, et la pièce de freinage 24 peut désormais être tirée vers l'arrière pour extraire ses cannelures 25 des cannelures du bout d'arbre 13 et dégager ses dents 30 des dents 31.

Il semble alors possible de dévisser l'écrou 21 en utilisant un outil engagé entre les dents 31, mais une telle opération est en réalité prématurée puisqu'un arbre de compresseur à basse pression 34, appartenant aussi à la ligne d'arbres à basse pression 11, est resté en place et s'étend juste devant l'écrou 21 : l'espace axial noté I qui les sépare est inférieur à la longueur d'engagement, notée J, de l'écrou 21 sur le bout d'arbre 13. Il est donc nécessaire de démonter encore le compresseur à basse pression 4 et son arbre 34 pour procéder au démontage du compresseur à haute pression 5, ce qui n'est pas forcément utile. De plus, le démontage du compresseur à basse pression 4 lui-même peut être compliqué et devoir être précédé du démontage d'autres éléments de la machine, par exemple d'une boîte d'engrenages non représentée sur les figures. Il résulte de tout cela que le démontage du compresseur à haute pression 5 est une opération longue et rebutante, qu'il n'est pas possible de faciliter en agrandissant l'espace I, ce qui obligerait à revoir toute la conception de la machine et augmenterait son encombrement.

L'objet de l'invention consiste ainsi à faciliter le démontage d'un tel agencement de retenue d'un palier comprenant une butée, un écrou de serrage et une pièce de freinage en réduisant les interventions manuelles préliminaires destinées à dégager ces pièces, afin de pouvoir séparer le palier du bout d'arbre qu'il soutient. Les avantages de l'invention sont manifestes avec une disposition de lignes d'arbres telle que celle qu'on vient de décrire, car il n'est plus besoin de procéder à des démontages de pièces devant la face d'extrémité du bout d'arbre, et un accès d'un seul côté à l'agencement de retenue, par lequel le bout d'arbre sera retiré, suffit. On propose pour cela un nouvel aspect de l'agencement de retenue. Dans sa conception la plus générale, l'agencement, disposé autour d'un bout d'arbre creusé d'une cavité et limité par une face d'extrémité, comprend une bague de butée du palier, un écrou de serrage de la bague et une pièce de freinage de l'écrou, la pièce de freinage étant retenue dans la cavité du bout d'arbre par des moyens de fixation amovibles et unie à l'écrou par des dents imbriquées et disposées en cercle sur l'écrou et la pièce de freinage, et il est caractérisé en ce que la bague comprend une portion intérieure couvrant la face d'extrémité du bout d'arbre jusqu'à la cavité et munie d'un filetage de vissage à un filetage de l'écrou, et l'écrou est placé dans la cavité et comprend une face de butée dirigée vers la face d'extrémité et engagée contre une face de butée érigée sur le bout d'arbre dans la cavité.

On éclaircira la nature de ce nouvel agencement et ses avantages à l'aide des figures suivantes, en plus des figures 1 et 2 déjà décrites et qui représentent une turbomachine et la portion de celle-ci qui porte un agencement de retenue classique :
- la figure 3 est analogue à la figure 2 mais illustre l'agencement inventif,
- la figure 4 est une vue en perspective du nouvel écrou et de sa pièce de freinage,
- et la figure 5 illustre une nouvelle pièce de freinage pouvant être utilisée à la place des précédentes.

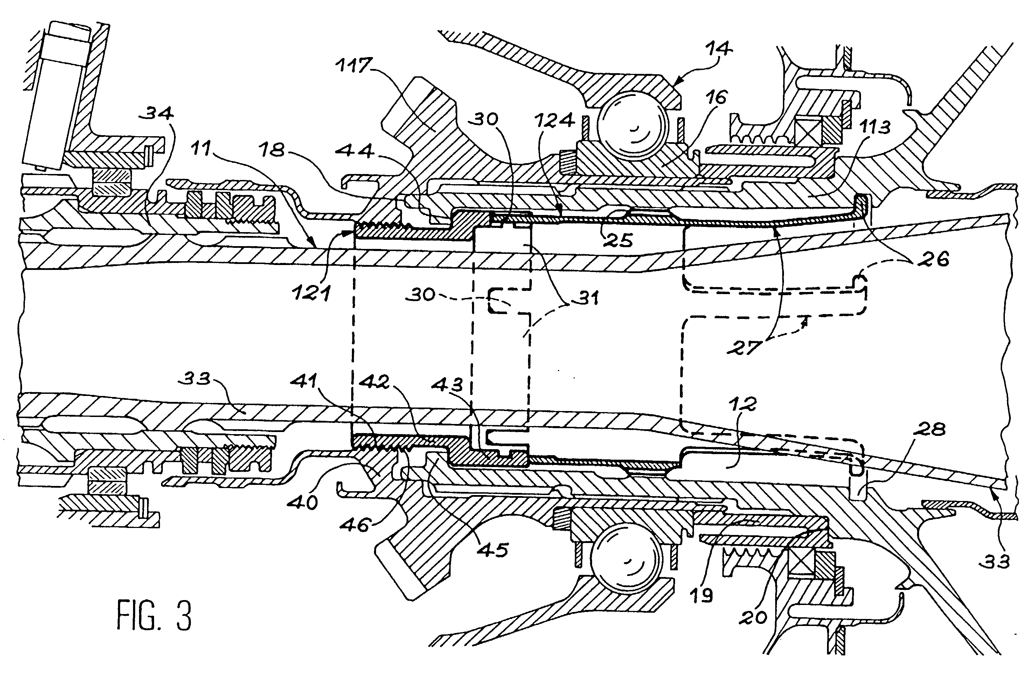

On retrouve plusieurs éléments de la figure 2 dans la figure 3 et en particulier ceux qui portent les références 11, 12, 14, 15, 16, 18, 19, 20, 33 et 34, dont la description ne sera donc pas recommencée. On retrouve aussi un bout d'arbre de compresseur à haute pression et une pièce de freinage, mais ces pièces sont ici référencées par 113 et 124 car elles comportent quelques différences d'aspect et de proportions si on les compare aux pièces correspondantes 13 et 24 de la conception connue ; et l'agencement de retenue comprend encore une bague de butée 117 et un écrou 121, mais qui sont assez différents des pièces correspondantes 17 et 21 déjà décrites. En effet, la bague de butée 117 s'étend au-delà du bout d'arbre 113 et présente une portion 40, couvrant la face d'extrémité 18 du bout d'arbre 113 et s'étendant jusque devant la cavité 12, comme la portion 32 de l'écrou 21, et qui est comme elle munie d'un filetage 41 sur sa face interne ; l'écrou 121 est rejeté dans la cavité 12, et on peut y distinguer une partie extérieure 42 et une partie intérieure 43, en prolongement dans l'axe de la machine et toutes deux cylindriques, la partie extérieure 42 étant plus fine et séparée de l'autre par une collerette 44 servant de face de butée (dirigée vers l'avant) et venant toucher une collerette de butée correspondante 45 établie sur le bout d'arbre 113 dans la cavité 12, non loin de la face d'extrémité 18. La partie extérieure 42 s'étend vers l'avant jusqu'à saillir hors du bout d'arbre 113, son extrémité est munie d'un filetage 46 engagé dans le filetage 41 de la bague de butée 117, et la partie intérieure 43 porte à son extrémité arrière un cercle de dents 31 analogues ou semblables à celles qu'on a déjà décrites et qui engrènent avec les dents 30 de la pièce de freinage 124.

On s'aperçoit que le démontage du compresseur à haute pression sera beaucoup plus rapide, car il suffira d'extraire la turbine à basse pression 7 et son arbre 33, puis la pièce de freinage 124 en la saisissant par les pattes flexibles 27, pour pouvoir dévisser l'écrou 121, qui sera lui aussi extrait par l'arrière de la machine. Le compression à haute pression 5 et son bout d'arbre 113 pourront alors être retirés par un mouvement vers l'arrière en laissant la bague de butée 117 en place contre le palier 14. Le remontage sera fait par des opérations inverses.

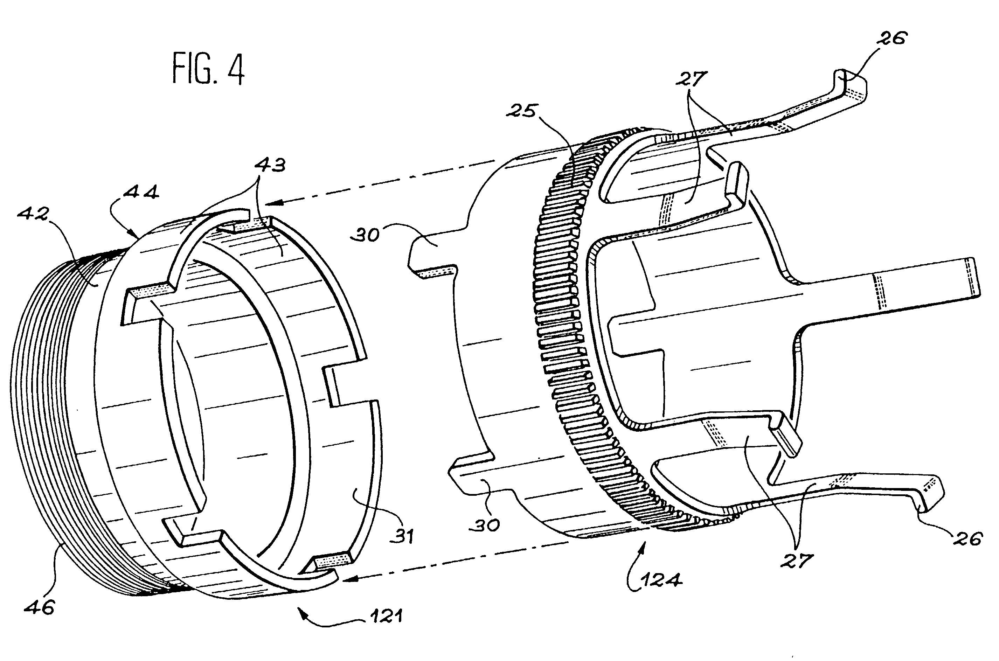

L'écrou 121 et la pièce de freinage 124 modifiés sont représentés isolément à la figure 4.

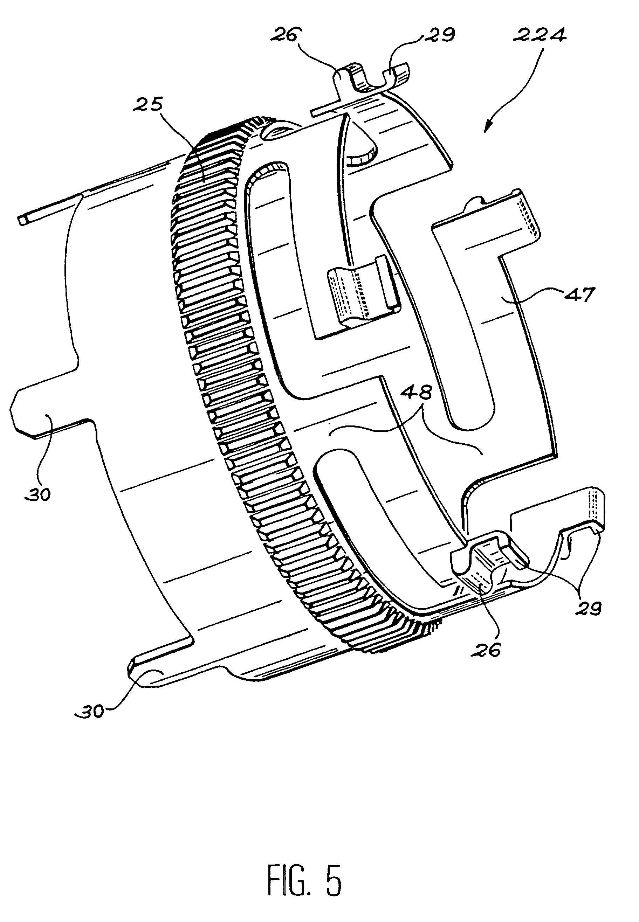

On n'est pas contraint de se borner à des pièces de freinage analogues à la pièce 24 connue : un exemple de pièce de freinage de substitution porte la référence 224 sur la figure 5 ; il se distingue des précédents en ce que les pattes flexibles 27 s'étendant axialement sont remplacées par des pattes 47 en arc de cercle et qui sont consécutives sur une circonférence. Ici encore, il suffit de presser sur l'extrémité libre de ces pattes 47 pour faire sortir l'extrémité recourbée 26 qu'elles portent hors de la gorge 28 du bout d'arbre 13 ou 113. On a encore représenté ici des languettes de prise 29 semblables à celles de la pièce 24 et qu'on aurait d'ailleurs pu ajouter également à la pièce 124. Des ponts 48 d'extension axiale relient les pattes 47, à l'opposé des extrémités recourbées 26, au reste de la pièce de freinage 224.

## Revendications

1. Agencement de retenue d'un palier (14) disposé autour d'un bout d'arbre (113) creusé d'une cavité (12) et limité par une face d'extrémité (18), comprenant une bague (117) de butée du palier (14), un écrou (121) de serrage de la bague (117) et une pièce de freinage (124) de l'écrou, la pièce de freinage étant retenue dans la cavité (12) du bout d'arbre par des moyens de fixation amovibles (25, 26) et unie à l'écrou par des dents (30, 31) imbriquées et disposées en cercle sur l'écrou (121) et la pièce de freinage (124), **caractérisé en ce que** la bague (117) comprend une portion intérieure (40) couvrant la face d'extrémité (18) du bout d'arbre (113) jusqu'à la cavité (12) et munie d'un filetage (41) de vissage à un filetage (46) de l'écrou (121), et l'écrou (121) est placé dans la cavité et comprend une face de butée (44) dirigée vers la face d'extrémité (18) et engagée contre une face de butée (45) érigée sur le bout d'arbre (113) dans la cavité (12).

2. Agencement de retenue d'un palier selon la revendication 1, **caractérisé en ce que** l'écrou est composé d'une partie extérieure (42) fine et d'une partie intérieure (43) épaisse séparées par une collerette (44) constituant la face de butée, la partie extérieure portant le filetage (46) et la partie intérieure portant le cercle de dents (31).

3. Agencement de retenue d'un palier selon l'une quelconque des revendications 1 ou 2, **caractérisé en ce que** les moyens de fixation comprennent des pattes flexibles (27, 47) à extrémité recourbée (26) sur la pièce de freinage, lesdites pattes étant opposées au cercle de dents (30), et une gorge (28) de logement des extrémités recourbées creusée dans la cavité (12).

4. Agencement de retenue d'un palier selon la revendication 3, **caractérisé en ce qu'**il comprend des languettes (29) de prise d'outil disposées sur les pattes flexibles (27, 47), près des extrémités recourbées.

5. Agencement de retenue d'un palier selon la revendication 3, **caractérisé en ce que** les pattes flexibles (27, 47) sont axiales.

6. Agencement de retenue d'un palier selon la revendication 3, **caractérisé en ce que** les pattes flexibles (47) sont en arc et consécutives sur un même cercle.

7. Agencement de retenue d'un palier conforme à l'une quelconque des revendications précédentes, **caractérisé en ce qu'**il est employé sur une turbomachine, le bout d'arbre (113) étant solidaire d'un compresseur à haute pression (5) et sa face d'extrémité (18) étant dirigée vers un compresseur à basse pression (4), le palier (14) faisant soutenir le bout d'arbre (113) par un carter (2).

## Claims

1. Arrangement for retaining a bearing (14) arranged around a stub shaft (113) in which is machined a cavity (12) and which is bounded by an end face (18) comprising a ring (117) forming a stop for the bearing (14), a nut (121) for clamping the ring (117) and a piece (124) for locking the nut, the locking piece being held in the cavity (12) of the stub shaft by removable means (25, 26) of attachment and connected to the nut by imbricated teeth (30, 31) arranged in a circle on the nut (121) and on the locking piece (124), the arrangement being **characterized in that** the ring (117) comprises an interior portion (40) covering the end face (18) of the stub shaft (113) as far as the cavity (12) and equipped with a screw thread (41) for screwing onto a thread (46) of the nut (121), and the nut (121) is placed in the cavity and comprises a stop face (44) directed towards the end face (18) and engaged against a stop face (45) standing up from the stub shaft (113) in the cavity (12).

2. Arrangement for retaining a bearing according to Claim 1, **characterized in that** the nut is made up of a slender outer part (42) and a thick inner part (43) which are separated by a collar (44) constituting the stop face, the outer part bearing the screw thread (46) and the inner part bearing the circle of teeth (31).

3. Arrangement for retaining a bearing according to either one of Claims 1 and 2, **characterized in that** the attachment means comprise flexible tabs (27, 47) with curved-over ends (26) on the locking piece, the said tabs being at the opposite end to the circle of teeth (30), and a groove (28) for housing the curved-over ends being machined in the cavity (12).

4. Arrangement for retaining a bearing according to Claim 3, **characterized in that** it comprises tool engagement tongues (29) arranged on the flexible tabs (27, 47), near the curved-over ends.

5. Arrangement for retaining a bearing according to Claim 3, **characterized in that** the flexible tabs (27, 47) are axial.

6. Arrangement for retaining a bearing according to Claim 3, **characterized in that** the flexible tabs (47) are in an arc and are consecutive on one and the same circle.

7. Arrangement for retaining a bearing according to any one of the preceding claims, **characterized in that** it is used on a turbomachine, the stub shaft (113) being secured to a high-pressure compressor (5) and its end face (18) facing towards a low-pressure compressor (4), the bearing (14) supporting the stub shaft (113) by way of a casing (2).

## Patentansprüche

1. Vorrichtung zum Halten eines Lagers (14), die um ein Wellenende (113) herum angeordnet ist, das mit einer Ausnehmung (12) versehen ist und mit einer Endseite (18) endet, bestehend aus einem Anschlagring (117) des Lagers (14), einer Befestigungsmutter (121) für den Ring (117) und einem Sicherungsteil (124) für die Mutter, wobei das Sicherungsteil in der Ausnehmung (12) des Wellenendes durch lösbare Befestigungsmittel (25, 26) festgehalten und mit der Mutter durch Zähne (30, 31) verbunden ist, die ineinander greifen und auf der Mutter (121) und auf dem Sicherungsteil (124) im Kreis angeordnet sind,
**dadurch gekennzeichnet,**
**dass** der Ring (117) einen inneren Abschnitt (40) aufweist, der die Endseite (18) des Wellenendes (113) bis zu der Ausnehmung (12) bedeckt und mit einem Gewinde (41) zum Einschrauben in ein Gewinde (46) der Mutter (121) versehen ist, und dass die Mutter (121) in der Ausnehmung (12) sitzt und eine Anschlagseite (44) aufweist, die der Endseite (18) zugewandt ist und fest an einer Anschlagseite (45) sitzt, die an dem Wellenende (113) in der Ausnehmung (12) ausgeführt ist.

2. Vorrichtung zum Halten eines Lagers nach Anspruch 1,
**dadurch gekennzeichnet,**
**dass** die Mutter aus einem dünnen, äußeren Teil (42) und einem dicken, inneren Teil (43) besteht, die voneinander mit einem Kragen (44) abgesetzt sind, welcher die Anschlagfläche bildet, wobei der äußere Teil das Gewinde (46) aufweist und der innere Teil den Kreis von Zähnen (31) trägt.

3. Vorrichtung zum Halten eines Lagers nach einem der Ansprüche 1 oder 2,
**dadurch gekennzeichnet,**
**dass** die Befestigungsmittel bewegliche Laschen (27, 47) mit umgebogenem Ende (26) an dem Sicherungsteil, wobei diese Laschen entgegengesetzt zu dem Kreis von Zähnen (30) angeordnet sind, sowie eine in der Ausnehmung (12) ausgeführte Auskehlung (28) zur Aufnahme der umgebogenen Enden umfassen.

4. Vorrichtung zum Halten eines Lagers nach Anspruch 3,
**dadurch gekennzeichnet,**
**dass** sie Greiflaschen (29) zum Ergreifen mit einem Werkzeug aufweist, die an den beweglichen Laschen (27, 47) in der Nähe der umgebogenen Enden angeordnet sind.

5. Vorrichtung zum Halten eines Lagers nach Anspruch 3,
**dadurch gekennzeichnet,**
**dass** die beweglichen Laschen (27, 47) axial angeordnet sind.

6. Vorrichtung zum Halten eines Lagers nach Anspruch 3,
**dadurch gekennzeichnet,**
**dass** die beweglichen Laschen (47) kreisbogenförmig und aufeinander folgend auf einem und dem gleichen Kreis angeordnet sind.

7. Vorrichtung zum Halten eines Lagers nach einem der vorherigen Ansprüche,
**dadurch gekennzeichnet,**
**dass** sie für ein Turbotriebwerk verwendet wird, wobei das Wellenende (113) fest mit einem Hochdruckverdichter (5) verbunden ist und seine Endseite (18) einem Niederdruckverdichter (4) zugewandt ist, wobei das Lager (14) sicherstellt, dass das Wellenende (113) von einem Gehäuse (2) gehalten wird.
